(19) Europäisches Patentamt / European Patent Office / Office européen des brevets

(11) **EP 3 953 990 B1**

(12) **FASCICULE DE BREVET EUROPEEN**

(45) Date de publication et mention de la délivrance du brevet:
**03.06.2026 Bulletin 2026/23**

(21) Numéro de dépôt: **20718394.8**

(22) Date de dépôt: **10.04.2020**

(51) Classification Internationale des Brevets (IPC):
**H01P 3/123** (2006.01)   **H01P 3/127** (2006.01)
**H01P 11/00** (2006.01)

(52) Classification Coopérative des Brevets (CPC):
**H01P 3/127; H01P 3/123; H01P 11/002**

(86) Numéro de dépôt international:
**PCT/IB2020/053434**

(87) Numéro de publication internationale:
**WO 2020/208595 (15.10.2020 Gazette 2020/42)**

(54) **DISPOSITIF À GUIDE D'ONDES ET PROCÉDÉ DE FABRICATION DE CE DISPOSITIF**

WELLENLEITERVORRICHTUNG UND HERSTELLUNGSVERFAHREN

WAVEGUIDE DEVICE AND METHOD FOR PRODUCING SAID DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2019 FR 1903906**

(43) Date de publication de la demande:
**16.02.2022 Bulletin 2022/07**

(73) Titulaire: **SWISSto12 SA**
**1020 Renens (CH)**

(72) Inventeurs:
• **DE RIJK, Emile**
  **1218 Grand-Saconnex (CH)**
• **BILLOD, Mathieu**
  **74160 Présilly (FR)**
• **CAPDEVILLA CASCANTE, Santiago**
  **1020 Renens (CH)**
• **DIMITRIADES, Alexandre**
  **1260 Nyon (CH)**
• **SIMON, Lionel**
  **1005 Lausanne (CH)**

(74) Mandataire: **P&TS SA (AG, Ltd.)**
**Avenue J.-J. Rousseau 4**
**P.O. Box 2848**
**2001 Neuchâtel (CH)**

(56) Documents cités:
| | |
|---|---|
| EP-A2- 0 189 963 | WO-A1-2017/149423 |
| WO-A1-2017/203568 | GB-A- 1 036 749 |
| US-A- 6 052 044 | US-A1- 2012 084 968 |
| US-A1- 2015 295 297 | |

**Description**

Domaine technique

La présente invention concerne un dispositif à guide d'ondes, un procédé de fabrication dudit dispositif.

Etat de la technique

Les signaux radiofréquence (RF) peuvent se propager soit dans un espace libre, soit dans des dispositifs guide d'onde. Ces dispositifs guide d'onde sont utilisés pour canaliser les signaux RF ou pour les manipuler dans le domaine spatial ou fréquentiel.

La présente invention concerne en particulier les dispositifs RF passifs qui permettent de propager et de manipuler des signaux radiofréquence sans utiliser de composants électroniques actifs. Les guides d'onde passifs peuvent être répartis en trois catégories distinctes :

- Les dispositifs basés sur le guidage d'ondes à l'intérieur de canaux métalliques creux, couramment appelés guides d'ondes.

- Les dispositifs basés sur le guidage d'ondes à l'intérieur de substrats diélectriques.

- Les dispositifs basés sur le guidage d'ondes au moyen d'ondes de surface sur des substrats métalliques tels que des circuits imprimés PCB, des microstrips, etc.

La présente invention concerne en particulier la première catégorie ci-dessus, collectivement désignée par la suite comme guides d'ondes. Des exemples de tels dispositifs incluent des guides d'ondes en tant que tels, des filtres, des antennes, des polariseurs, des convertisseurs de mode, etc. Ils peuvent être utilisés pour le routage de signal, le filtrage fréquentiel, la séparation ou recombinaison de signaux, l'émission ou la réception de signaux dans ou depuis l'espace libre, etc.

Les guides d'onde classiques utilisés pour les signaux radiofréquence ont des ouvertures internes de section rectangulaire ou circulaire. Ils permettent de propager des modes électromagnétiques correspondant à différentes distributions de champ électromagnétique le long de leur section.

Un exemple d'un tel guide d'ondes conventionnel est illustré sur la figure 1 tirée de la demande de brevet WO2017208153. Il est constitué par un dispositif creux, dont la forme et les proportions déterminent les caractéristiques de propagation pour une longueur d'onde donnée du signal électromagnétique. La section du canal interne de ce dispositif est rectangulaire. D'autres sections de canaux sont suggérées dans ce document, y compris des formes circulaires. Les documents US 2015/295297 A1 (COOK BENJAMIN S [US] ET AL) 15 octobre 2015 (2015-10-15) et WO 2017/203568 A1 (MITSUBISHI ELECTRIC CORP [JP]) 30 novembre 2017 (2017-11-30) décrivent aussi des sections de canaux différentes.

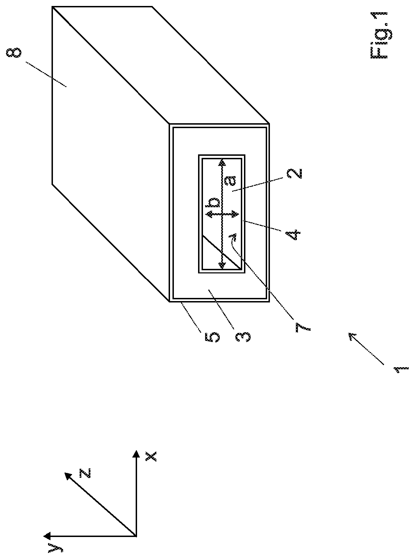

Le guide d'ondes 1 de la figure 1 comporte une âme 3 réalisée par fabrication additive en superposant des couches les unes sur les autres. Cette âme 3 délimite un canal interne 2 destiné au guidage d'ondes, et dont la section est déterminée selon la fréquence du signal électromagnétique à transmettre. L'âme 3 présente une surface interne 7 et une surface externe 8, la surface interne 7 recouvrant les parois de l'ouverture de section rectangulaire 2. La surface interne 7 de l'âme 3 est recouverte d'une couche métallique 4 conductrice. La surface externe 8 peut aussi être recouverte d'une couche métallique 5 conductrice qui contribue notamment à la rigidité du dispositif.

Les guides d'onde rectilignes comme sur la figure 1 sont souvent imprimés avec des couches successives perpendiculaires à la direction longitudinale z, c'est-à-dire en position verticale. Cela permet d'imprimer des surfaces latérales du guide en position verticale et donc d'éviter l'impression additive de portions en porte-à-faux qui sont difficiles ou même impossibles à réaliser.

Les guides d'onde sont cependant souvent incurvés afin par exemple de connecter des équipements ou dispositifs qui ne sont pas alignés entre eux. On connait aussi des guides d'onde comportant des bifurcations, par exemple des polariseurs, ou de changements de forme ou de surface de la section transversale, par exemple afin de réaliser des filtres ou d'autres composants. La réalisation par fabrication additive de tels guide d'onde incurvés ou de forme non rectiligne pose cependant des difficultés supplémentaires, car certaines portions de l'âme du guide d'onde se retrouvent alors nécessairement en porte-à-faux lors de l'impression.

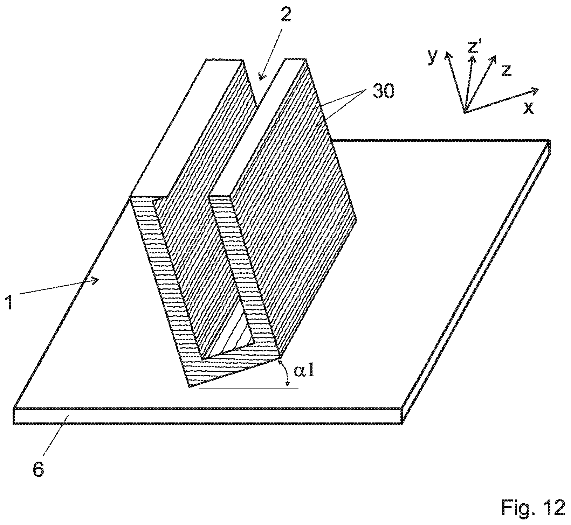

La figure 12 illustre une portion d'âme 3 de guide d'onde rectangulaire 1 lors de son impression additive sur une plateforme horizontale 6. La direction longitudinale z du guide d'onde est dans cet exemple sensiblement horizontale, mais aucune des surfaces latérales du guide n'est horizontale. Il en résulte des couches additives 30 pour l'impression de l'âme qui ne sont pas parallèles aux flancs du guide d'onde et qui forment en outre un angle, par exemple un angle $\alpha 1$, avec la surface horizontale xy du plateau d'impression. La plupart des procédés d'impression additive, notamment les procédés par fusion laser sélective (SLM) imposent cependant un angle minimal, par exemple 20 ou 40°, pour éviter le risque d'affaissement d'une nouvelle couche déposée en porte-à-faux. Il est par conséquent impossible d'imprimer certaines portions de guide d'onde, ou en tout cas de les imprimer avec la précision souhaitée.

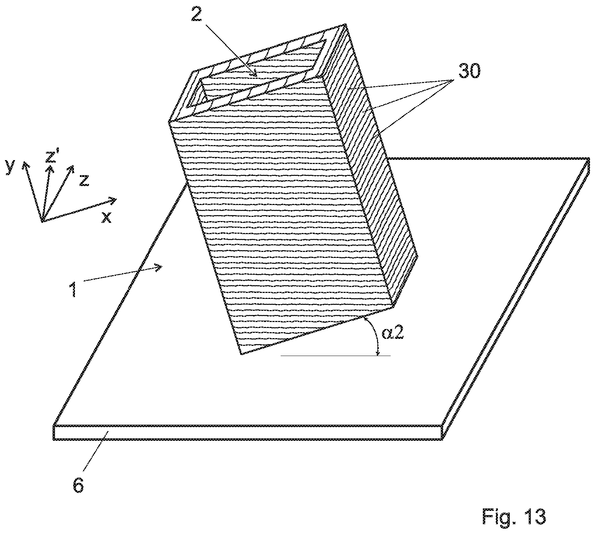

La figure 13 illustre schématiquement l'angle $\alpha 2$ qui est formé entre les couches 30 d'impression additive d'une portion de guide d'onde dont l'axe longitudinal z est oblique par rapport au plan x-y de la plateforme d'impression 6.

Bref résumé de l'invention

Un but de la présente invention est de proposer des dispositifs à guides d'onde comprenant une âme réalisée par impression additive et qui soient plus simples à fabriquer.

Un but de la présente invention est de proposer des dispositifs à guides d'onde comprenant une âme réalisée par impression additive et qui soient plus solides.

Un autre but de la présente invention est de proposer des dispositifs à guide d'onde pouvant être reliés directement à différents types d'équipements ou d'autres dispositifs à guide d'onde.

Selon l'invention, ces buts sont atteints notamment au moyen d'un dispositif à guide d'ondes pour guider un signal radiofréquence à une fréquence déterminée, comprenant:

et comprenant des parois latérales avec des surfaces externes et internes, les surfaces internes délimitant un canal de guide d'ondes,

une section transversale du canal comportant deux côtés rectilignes reliés entre eux par deux demi-portions, au moins une des deux demi-portions étant arrondie ou formée d'au moins deux segments de droite,

ladite section transversale ayant une longueur maximale et une largeur maximale, le rapport entre la longueur maximale / largeur maximale étant compris entre 2,05 et 3,5, de préférence entre 2,05 et 2,4.

Les deux côtés rectilignes facilitent l'impression 3D, notamment lorsque le guide d'onde est imprimé avec ces sections en position verticale, ou proche de la verticale, ce qui permet de réduire ou même d'éviter les problèmes de porte-à-faux entre une couche d'impression et la couche superposée.

La longueur maximale s'étend de préférence dans une direction parallèle aux deux côtés rectilignes. Les deux côtés rectilignes forment de préférence les grands côtés de la section.

La forme arrondie ou ou formée d'au moins deux segments de droite des demi-portions fonctionne comme une paire de voutes reliant les deux côtés rectilignes entre eux, ce qui permet aussi de faciliter l'impression 3D en réduisant les problèmes de porte-à-faux, et d'autre part d'augmenter la stabilité et la solidité du dispositif pendant et après l'impression 3D.

La forme arrondie des petits côtés du guide d'onde limite la longueur du porte-à-faux et réduit donc le risque d'affaissement, ou l'amplitude de cet affaissement s'il se produit malgré tout.

Cette forme améliore par ailleurs les performances du guide d'onde en réduisant l'atténuation par mètre.

Généralement, la forme de cette section présente ainsi notamment l'avantage de faciliter l'impression en 3D de guides d'onde ou de portions de guide d'onde notamment avec les portions rectilignes verticales, proches de la verticale, et même dans des orientations quelconques par rapport à l'horizontale.

Le terme demi-portion désigne n'importe quelle courbe ou forme ouverte permettant de relier l'extrémité d'un des côtés rectilignes à l'autre extrémité.

La section transversale du canal est de préférence de forme ovale.

Il est possible de démontrer que, dans un guide d'onde rectangulaire selon la figure 1, la portion du champ électrique qui est polarisée rectilignement suivant l'axe y parallèle à la longueur a pour expression :

$$\vec{E} = E_{0y} \sin\left(\frac{m\pi}{a}x\right) e^{j(kz-\omega t)} \vec{u}_y, \; m \in \mathbb{N}^*$$

La portion du champ électrique dans le guide d'onde qui est polarisée rectilignement suivant l'axe x parallèle à la largeur b obéit à la même expression, en remplaçant a par b et x par y.

Le champ électrique subit donc une atténuation en z le long du guide d'onde. Il est possible de déterminer que l'atténuation minimale est obtenue lorsque le rapport entre la longueur a et la largeur b du canal vaut exactement 2. Cette proportion favorise en outre le filtrage des modes de transmission indésirables. Pour cette raison, les guides d'onde à section rectangulaire ont généralement un rapport a/b qui vaut exactement 2.

Il a été démontré dans le cadre de l'invention que des guides d'onde avec la forme décrite et revendiquée ont un minimum d'atténuation lorsque le rapport a/b est compris entre 2,05 et 3,5, de préférence entre 2,05 et 2,4, en particulier pour une valeur entre 2,1 et 2,3, par exemple 2,2. Ces valeurs sont en particulier optimales pour des guides d'onde de section ovale.

Un autre avantage de cette géométrie de canal est de réduire la surface des surfaces internes et externes de l'âme, et donc la surface qui doit être recouverte d'une déposition.

Les demi portions peuvent être arrondies.

Les demi portions arrondies peuvent former des demi-cercles.

Le terme ovale désigne dans ce texte n'importe quelle forme fermée dépourvue d'angles vifs et de portions concaves, à l'exception éventuelle de stries ou de septums. Le terme ovale désigne en particulier des formes fermées non circulaires, de préférence non elliptiques, et pourvues de deux axes de symétrie (à l'exception d'éventuelles stries ou septums).

La section peut comporter deux longs côtés rectilignes reliés par deux demi-cercles.

La face interne du canal peut être munie d'une strie.

La face interne du canal peut être munie de deux stries en regard l'une de l'autre.

La section peut évoluer progressivement d'une dite section ovale au milieu du dispositif d'une dite section ovale vers une section rectangulaire à au moins une extrémité du dispositif. Cela permet par exemple d'adapter la section à un guide d'onde ou un connecteur de guide d'onde d'un autre équipement, sans nécessiter de pièces d'adaptation intermédiaire.

Le dispositif peut être torsadé par rotation progressive de ladite section transversale le long d'au moins une portion du dispositif.

Le dispositif peut être torsadé par rotation progressive de la section transversale autour de l'axe longitudinal du dispositif le long d'au moins une portion du dispositif.

Le dispositif peut être torsadé par rotation progressive de ladite section transversale simultanément autour de l'axe longitudinal et d'au moins un autre axe du dispositif le long d'au moins une portion du dispositif.

Le dispositif peut être incurvé par rotation progressive de la section transversale autour d'un axe transversal parallèle à un coté rectiligne du dispositif le long d'au moins une portion du dispositif. Cela permet notamment de modifier la direction de transmission du signal.

Le dispositif peut être incurvé par rotation progressive de la section transversale autour d'un axe transversal perpendiculaire à un côté rectiligne du dispositif le long d'au moins une portion du dispositif. Cela permet notamment de modifier la direction de transmission du signal.

Le dispositif peut comporter une couche conductrice recouvrant l'âme, ladite couche conductrice étant formée d'un métal. Cette couche permet de rendre conductrices les surfaces du guide d'onde, et de lisser les surfaces de l'âme réalisée par impression 3D.

Le dispositif peut comporter au moins un axe de symétrie et être réalisée par impression 3D du dispositif en formant plusieurs couches sur une plateforme d'impression, les couches étant non parallèles à aucun plan de symétrie.

L'invention a aussi pour objet un procédé de fabrication d'un dispositif à guide d'ondes tel que décrit ou revendiqué, comportant une étape de fabrication additive de l'âme et une étape de déposition d'une couche conductrice sur cette âme,
dans lequel la fabrication additive est obtenue par additions de couches successives parallèles entre elles, lesdites couches étant non parallèles auxdits côtés rectilignes de la section transversale du dispositif.

Cette fabrication additive par couches obliques par rapport à une moins une portion rectiligne de la section transversale du dispositif offre une grande liberté pour la fabrication additive de guides d'onde comportant des portions orientées de manière quelconque par rapport au plan de la plateforme d'impression.

Il est par exemple possible d'imprimer des dispositifs à guide d'onde comportant des sections parallèles ou perpendiculaires au plan d'impression des couches, et au moins une autre section on parallèles à ce plan.

La forme de la section transversale telle que décrite permet de réduire l'amplitude et les conséquences des porte-à-faux lors de cette impression.

Seuls les côtés rectilignes doivent être de préférence suffisamment verticaux lors de l'impression. Dans un mode de réalisation, l'angle entre les couches d'impression et les côtés rectilignes est donc supérieur à 20°, de préférence supérieur à 40°.

Brève description des figures

Des exemples de mise en œuvre de l'invention sont indiqués dans la description illustrée par les figures annexées dans lesquelles :

- La figure 1 illustre une portion de guide d'onde selon l'art antérieur.

- La figure 2 illustre une portion de guide d'onde de section transversale ovale selon un mode de réalisation.

- La figure 3 illustre une portion de guide d'onde de section transversale ovale avec une strie longitudinale selon un mode de réalisation.

- La figure 4 illustre une portion de guide d'onde de section transversale ovale avec deux stries longitudinales selon un mode de réalisation.

- La figure 5 illustre une portion de guide d'onde de section transversale ovale dont les extrémités évoluent progressivement vers une section rectangulaire.

- La figure 6 illustre une portion de guide d'onde de section transversale ovale torsadée autour d'un axe selon un mode de réalisation de l'invention.

- La figure 7 illustre une portion de guide d'onde de section transversale ovale torsadée autour de deux axes selon un mode de réalisation de l'invention.

- La figure 8 illustre une portion de guide d'onde de section transversale ovale torsadée et incurvée selon un mode de réalisation de l'invention.

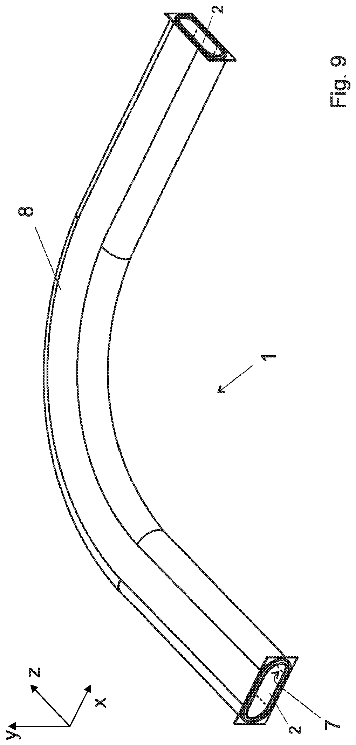

- La figure 9 illustre schématiquement la direction d'impression de l'âme d'une portion de guide d'onde selon différents modes de réalisation de l'invention.

- La figure 10 illustre une portion de guide d'onde dont la section intermédiaire est torsadée.

- La figure 11 est un diagramme de mesure comparant l'atténuation linéaire d'un guide d'onde conventionnel à section rectangulaire avec un rapport longueur/largeur égal à 2, avec celle d'un guide d'onde ovale selon l'invention et un rapport longueur/largeur égal à 2.

- La figure 12 illustre schématiquement l'impression 3D d'un guide d'onde à section transversale rectangulaire, l'impression étant réalisée en position couchée avec des plans d'impression obliques par rapport à certains bords de la section transversale, résultant en des sections en porte-à-faux problématiques.

- La figure 13 illustre schématiquement l'impression 3D d'un guide d'onde à section transversale rectangulaire, l'impression étant réalisée en position proche de la verticale mais avec des plans d'impression obliques par rapport à certains bords de la section transversale, résultant en des sections en porte-à-faux problématiques.

- La figure 14 illustre schématiquement l'impression 3D d'un guide d'onde à section transversale rectangulaire selon l'invention, l'impression étant réalisée avec des plans d'impression obliques par rapport à certains bords de la section transversale, résultant en des sections en porte-à-faux problématiques.

- La figure 15 illustre une section de guide d'onde comportant deux côtés rectilignes reliés entre eux par deux demi-portions formées chacune d'au moins deux segments de droite selon un mode de réalisation.

- La figure 16 illustre une section de guide d'onde comportant deux côtés rectilignes reliés entre eux par une demi-portion en arc de cercle et une autre demi-portion formée d'au moins deux segments de droite, selon un mode de réalisation.

- La figure 17 illustre une section de guide d'onde comportant deux côtés rectilignes reliés entre eux par une demi-portion formée d'au moins deux segments de droite et une autre demi-portion rectiligne selon un mode de réalisation.

Exemple(s) de mode de réalisation de l'invention

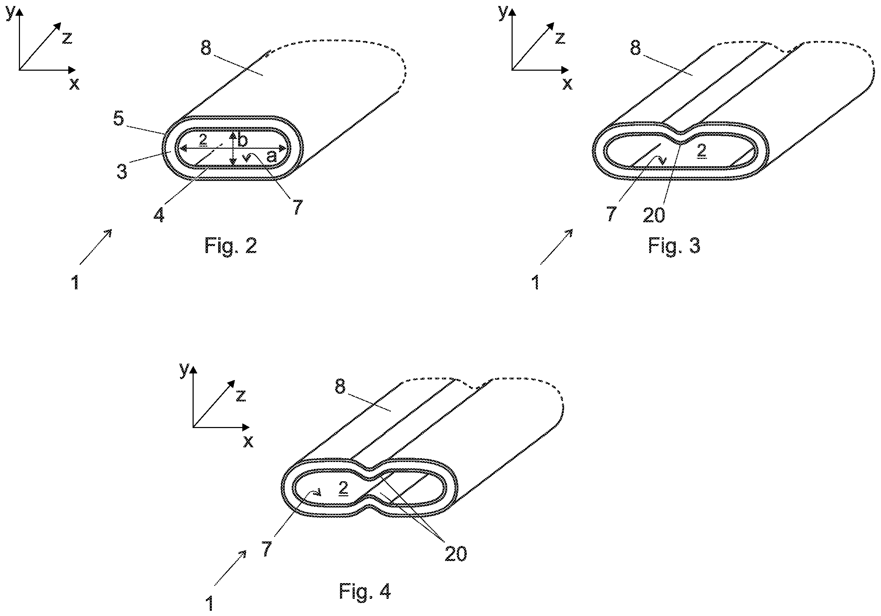

Le guide d'onde 1 des différents modes de réalisation décrits ou revendiqués, par exemple celui de la figure 2, comporte une âme 3, par exemple une âme en métal (aluminium, titane ou acier), ou en polymère, en époxy, en céramique, ou en matériau organique.

L'âme 3 est fabriquée par fabrication additive, de préférence par stéréolithographie, par fusion laser sélective (« selective laser melting ») ou par « selective laser sintering » (SLS) afin de réduire la rugosité de la surface. Le matériau de l'âme peut être non conducteur ou conducteur. L'épaisseur des parois de l'âme est par exemple entre 0,5 et 3 mm, de préférence entre 0,8 et 1,5 mm.

La forme de l'âme peut être déterminée par un fichier informatique stocké dans un support de données informatique.

L'âme peut aussi être constituée de plusieurs parties formées par impression 3D et assemblées entre elles avant le plaquage, par exemple par collage ou fusion thermique ou assemblage mécanique.

Cette âme 3 délimite un canal interne 2 destiné au guidage d'ondes. L'âme 3 présente par conséquent une surface interne 7 et une surface externe 8, la surface interne 7 recouvrant les parois de l'ouverture de section ovale 2.

La surface interne 7 de l'âme 3 est de préférence recouverte d'une couche métallique 4 conductrice, par exemple de cuivre, d'argent, d'or, de nickel etc., plaqué par déposition chimique sans courant électrique. L'épaisseur de cette couche est par exemple comprise entre 1 et 20 micromètres, par exemple entre 4 et 10 micromètres. Le revêtement peut aussi être un assemblage de couches et comporter par exemple une couche de lissage directement sur l'âme, une ou plusieurs couches d'accrochage, etc.

L'épaisseur du revêtement conducteur 4 doit être suffisante pour que la surface soit conductrice électriquement à la fréquence radio choisie. Ceci est typiquement obtenu à l'aide d'une couche conductrice dont l'épaisseur est supérieure à la profondeur de peau $\delta$ .

La surface externe 8 du canal est de préférence également recouverte d'une couche métallique qui permet notamment de rigidifier le dispositif, et de lui donner la solidité requise.

Le canal du guide d'onde peut comporter un septum non représenté afin d'agir comme polariseur afin de séparer les deux polarités orthogonales d'un signal. La hauteur du septum peut être variable, par exemple avec des marches en escalier.

Dans tous les modes de réalisation, le canal du guide d'onde peut en outre être strié, comme on le verra plus loin.

Au moins une extrémité du guide d'onde peut comporter une ou des flanges non représentées afin de le connecter à un autre dispositif à guide d'onde ou à un équipement.

Le guide d'onde est par exemple destiné à être utilisé dans un satellite pour relier un équipement de communication, par exemple un émetteur ou récepteur radiofréquence, à une antenne ou un réseau d'antenne. Une extrémité du guide d'onde peut être conformée en antenne.

La forme et les proportions de la section de ce canal est déterminée selon la fréquence du signal électromagnétique à transmettre et selon les atténuations de différents modes de transmission.

Dans le mode de réalisation de la figure 2, la section transversale du canal 2 à travers le guide d'onde est ovale et comporte deux portions rectilignes parallèles et deux petits côtés arrondis. La longueur maximale a du canal dans la direction x est égale à a et la largeur maximale du canal dans la direction y, c'est-à-dire entre les côtés rectilignes, est égale à b.

Le rapport entre la longueur maximale a du canal et sa largeur maximale b dans un guide d'onde conventionnel à section rectangulaire vaut typiquement 2. Cette valeur a été déterminée empiriquement comme étant celle qui produit l'atténuation la plus faible par mètre linéaire.

Selon l'invention, il a été déterminé par des tests et des simulations que dans le cas d'un canal de guide d'onde ayant la forme ovale telle que décrite, le rapport entre la longueur maximale a du canal et sa largeur maximale b est supérieur à 2, de préférence entre 2,05 et 2,4, par exemple entre 2,1 et 2,3, de préférence 2,2.

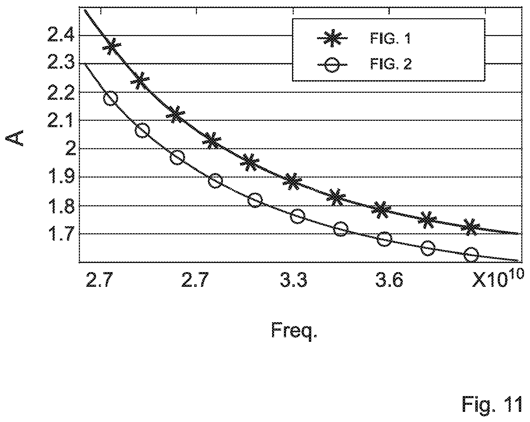

La figure 11 montre l'atténuation du signal par mètre linéaire en fonction de la fréquence, dans le cas d'un canal de guide d'onde rectangulaire avec un rapport a/b de 2 (courbe supérieure) et avec un canal de guide d'onde tel que décrit et un rapport a/b de 2,2. Comme on le voit sur la base de ces résultats de mesure, les pertes provoquées par la transmission dans un canal de guide d'onde ovale tel que décrit sont donc inférieures aux pertes du signal dans un canal de guide d'onde conventionnel, à condition de modifier le rapport longueur maximale a / largeur maximale b et de porter cette valeur à 2,2 par exemple.

A titre d'exemple, dans un mode de réalisation, le dispositif à guide d'onde est adapté à la transmission de signaux dans une gamme de fréquence entre 26,5 et 40 GHz. Les dimensions b peuvent valoir 3,556mm, a=7,823 mm. Le rayon de courbure r des extrémités incurvées vaut donc b/2 = 1,778 mm.

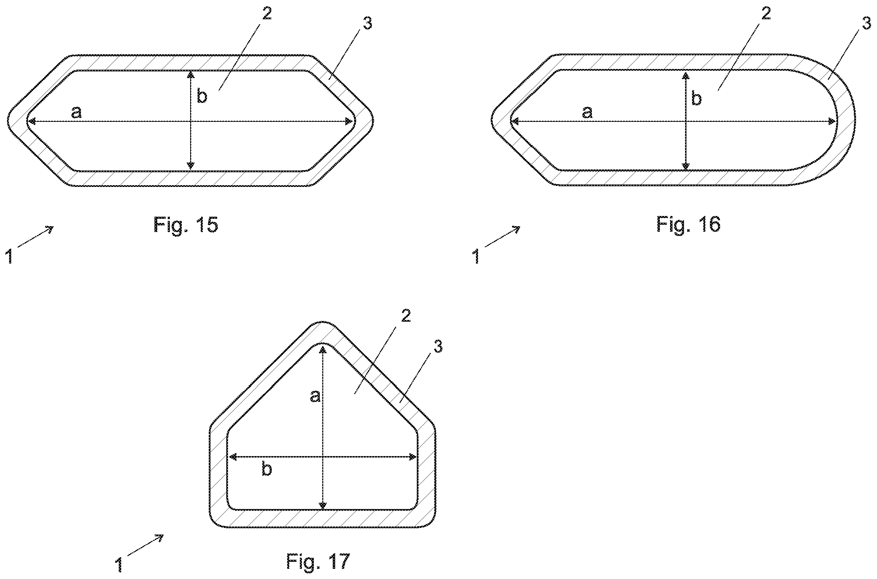

Dans le mode de réalisation de la figure 15, la section de guide d'onde comporte deux côtés rectilignes reliés entre eux par deux demi-portions formées de N segments de droites, N étant supérieur ou égal à 2. Dans cet exemple, chaque demi-portion est formée de 2 segments de droite. Des demi-portions formées de 3, 4 5 ou 6 segments de droite, par exemple, peuvent aussi être réalisées. La longueur des segments est de préférence égale et les angles entre segments égaux, afin d'approximer au mieux la forme de demi-cercle.

Dans le mode de réalisation de la figure 16, la section de guide d'onde comporte deux côtés rectilignes reliés entre eux par une demi-portion en arc de cercle et une autre demi-portion formée, comme dans l'exemple plus haut, de N segments de droites.

Dans le mode de réalisation de la figure 17, la section de guide d'onde comporte deux côtés rectilignes reliés entre eux par une demi-portion rectiligne et une autre demi-portion formée, comme dans l'exemple plus haut, de N segments de droites.

Comme illustré sur la figure 3, la surface interne 7 du canal peut être munie d'une strie 20 sur un des longs côtés, afin de contrôler les modes de transmission. La hauteur de cette strie peut être variable. La strie 20 peut être rectiligne, comme représenté, ou torsadée. La surface interne peut aussi être munie d'un septum non représenté.

Comme illustré sur la figure 4, la surface interne 7 du canal peut être munie de plusieurs stries 20, par exemple de deux stries en regard l'une de l'autre sur les deux longs côtés opposés, afin de contrôler les modes de transmission. Des guides d'onde munis de trois stries à 120° l'une de l'autre, ou de quatre stries à 90°, peuvent aussi être réalisés.

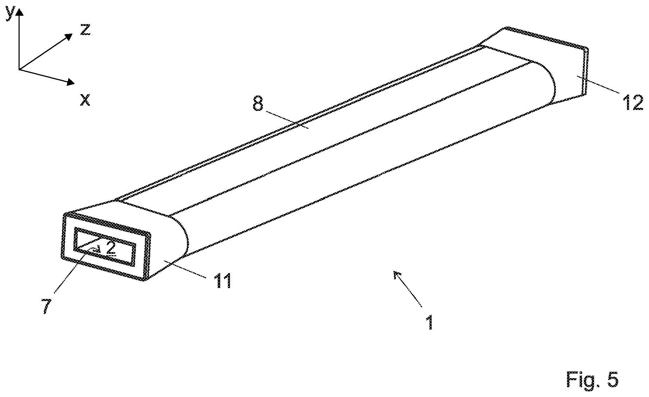

Comme illustré sur la figure 5, la section transversale du canal 2 peut changer progressivement de forme et passer par exemple d'une forme ovale comme décrite plus haut au milieu du guide, à une forme rectangulaire à une extrémité 11 ou aux deux extrémités 11,12 du guide d'onde 1. La transition peut se faire sur une portion réduite de la longueur du dispositif, par exemple sur une portion inférieure à 10 mm, par exemple une portion de 5 mm. Ce changement de forme permet de réaliser un dispositif dont la section est ovale sur la plus grande partie de sa longueur, avec les avantages décrits plus haut, mais qui peut être connecté directement à des guides d'onde ou à des équipements comportant un canal de guide d'onde rectangulaire. La transition peut aussi comporter une modification du rapport entre la longueur maximale a et la largeur maximale b du canal 2, afin par exemple de passer d'un rapport compris entre 2,05 et 2,4 pour la portion intermédiaire ovale à un rapport de 2 à l'extrémité ou aux extrémités.

Dans un mode de réalisation non illustré, la section transversale du canal 2 conserve sa forme ou son type de forme sur toute sa longueur, les proportions entre la longueur a et la largeur b du canal étant toutefois progressivement modifiées.

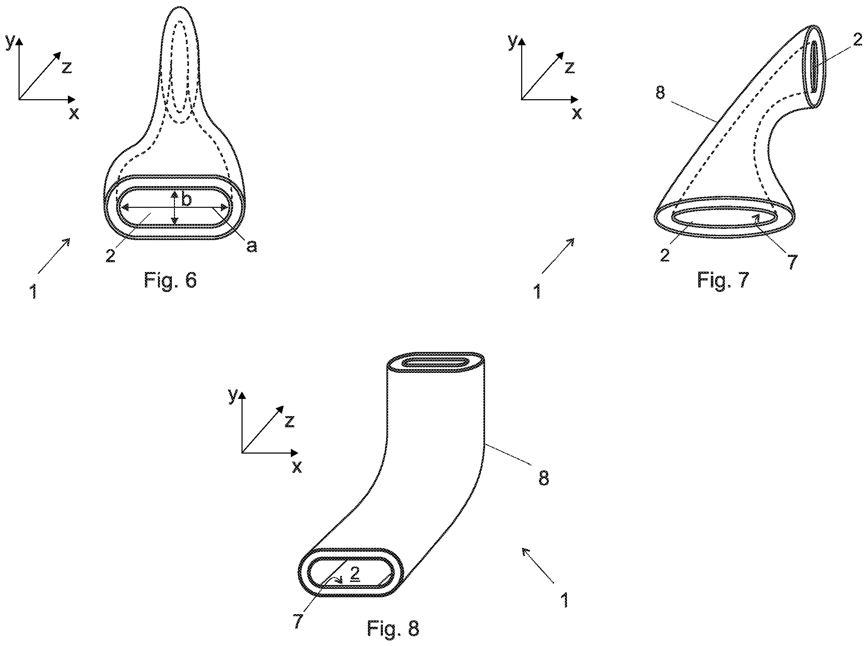

Comme illustré sur la figure 6, le guide d'onde 1 peut être torsadé. A cet effet, la section transversale du canal 2 subit une rotation progressive le long de la direction longitudinale du guide, par exemple une rotation autour de l'axe longitudinal z. Sur la figure 6, la rotation entre les deux extrémités du guide d'onde est de 90° en sorte que la plus grande longueur a du canal 2 qui est dans un plan horizontal à une extrémité du guide d'onde se retrouve dans un plan vertical à l'autre extrémité.

Une rotation progressive de la section transversale du guide d'onde autour de l'axe x et/ou de l'axe y peut aussi être réalisée.

Comme illustré sur la figure 7, le guide d'onde 1 peut aussi être torsadé par rotation progressive de la section transversale simultanément autour de l'axe longitudinal (z) et d'au moins un autre axe du dispositif, ici de l'axe y.

Comme illustré sur la figure 8, le guide d'onde 1 peut aussi être incurvé et changer ainsi de direction longitudinale, grâce à une rotation progressive de ladite section transversale autour de l'axe transversal (x) du dispositif. Cette rotation peut se produire sur une portion limitée de la longueur du guide d'onde, qui comprend ainsi comme dans l'exemple successivement une portion rectiligne, une portion incurvée et une seconde portion rectiligne. Le dispositif à guide d'onde peut être incurvé autour de l'axe longitudinal z du canal.

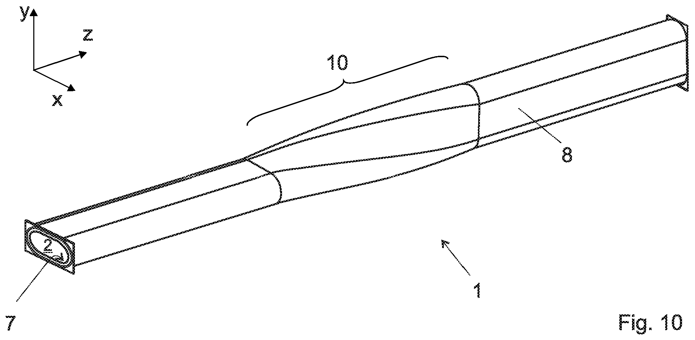

La figure 10 illustre un dispositif à guide d'onde de section transversale ovale, comportant deux portions d'extrémité rectilignes et une portion centrale 10 torsadée de 90° de manière à ce que qu'une des extrémités du dispositif soit pivotée, par exemple de 90°, par rapport à l'extrémité opposée.

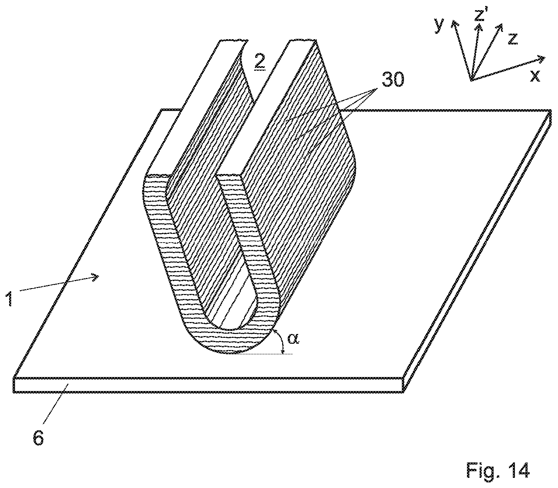

Comme mentionné, l'âme 3 du dispositif est réalisée par impression 3D, par exemple par stéréolithographie ou par déposition ou durcissement de couches successives. Comme illustré schématiquement sur la figure 14 montrant un guide d'onde en cours d'impression, l'impression de dispositifs à guide d'onde de forme complexes, par exemple des dispositifs incurvés, torsadés, comportant des bifurcations ou des changements de section du canal de guidage, peut impliquer que sur au moins certaines sections les couches d'impression ne sont pas parallèles au plateau d'impression, c'est-à-dire à l'horizontale. La forme en voûte des petits côtés du canal 2 permet cependant de limiter la longueur des portions en porte-à-faux, et donc de réduire le risque et/ou l'amplitude de l'affaissement de ces portions avant durcissement. Cette forme en voûte est par ailleurs intrinsèquement plus solide et plus rigide qu'une forme en linteau comme dans un guide d'onde à section rectangulaire, en sorte que la géométrie du canal est mieux préservée avant et après le durcissement des couches d'impression. On observe aussi sur cette figure que la forme rectiligne des grands côtés facilite l'impression des couches qui les composent, notamment si l'impression est effectuée avec les grands côtés rectilignes qui s'étendent verticalement ou sensiblement verticalement.

Les surfaces rectilignes du dispositif à guide d'onde sont de préférence orientées verticalement, ou en tout cas avec un angle supérieur à 20°, de préférence supérieur à 40°, pour éviter le risque de déformation de ces surfaces.

L'expression « de forme ovale » dans la présente description et dans les revendications n'exclut pas des formes sensiblement ovales selon la définition donnée plus haut, mais comprenant une ou plusieurs stries ou septums, ou un ou plusieurs trous. L'expression « rectiligne » n'exclut pas davantage la présente de strie, de septum ou de trou.

**Numéros de référence employés sur les figures**

1   Dispositif à guide d'onde
2   Canal (ouverture du guide d'onde)
20   Strie

3   Ame réalisée par impression 3D
4   Revêtement métallique interne
5   Revêtement métallique externe
6   Plateforme d'impression
7   Surface interne
8   Surface externe
10   Portion intermédiaire d'un dispositif à guide d'onde
11   Portion d'extrémité 1
12   Portion d'extrémité 2
a   Plus grande longueur du canal
b   Largeur du canal, dans une direction perpendiculaire à a
x,y   Axes orthogonaux dans le plan de la section transversale du canal
z   Axe longitudinal du canal
z1   Axe perpendiculaire aux couches de déposition lors de l'impression 3D de l'âme
a   Angle entre une surface du dispositif et la plateforme d'impression.

**Revendications**

1. Dispositif à guide d'ondes (1) pour guider un signal radiofréquence à une fréquence, f, déterminée, le dispositif (1) comprenant:

   une âme (3) fabriquée par fabrication additive et comprenant des parois latérales avec des surfaces externes (8) et internes (7), les surfaces internes (7) délimitant un canal de guide d'ondes (2),
   une section transversale du canal (2) comportant deux côtés rectilignes reliés entre eux par deux demi-portions, au moins une des deux demi-portions étant arrondie ou formée d'au moins deux segments de droite,
   **caractérisé en ce que**
   ladite section transversale ayant une longueur maximale (a) et une largeur maximale (b), le rapport entre la longueur maximale (a) / largeur maximale (b) étant compris entre 2,05 et 3,5, de préférence entre 2,05 et 2,4.

2. Dispositif selon la revendication 1, dans lequel la au moins une des deux demi-portions est arrondie, les deux demi portions étant arrondies.

3. Dispositif selon la revendication 2, lesdites demi-portions arrondies formant des demi-cercles.

4. Le dispositif de l'une des revendications 1 à 3, la face interne du canal (2) étant munie d'au moins une strie (20).

5. Le dispositif de l'une des revendications 1 à 4, la face interne du canal (2) étant munie de deux stries (20) sur lesdits longs côtés rectilignes, les deux stries étant en regard l'une de l'autre.

6. Le dispositif de l'une des revendications 1 à 5, **caractérisé en ce qu'**il est torsadé par rotation progressive de ladite section transversale le long d'au moins une portion du dispositif.

7. Le dispositif de la revendication 6, **caractérisé en ce qu'**il est torsadé par rotation progressive de ladite section transversale autour de l'axe longitudinal (z) du dispositif.

8. Le dispositif de l'une des revendications 5 à 7, **caractérisé en ce qu'**il est torsadé par rotation progressive de ladite section transversale simultanément autour de l'axe longitudinal (z) et d'au moins un autre axe (x, y) du dispositif.

9. Le dispositif de l'une des revendications 1 à 8, **caractérisé en ce qu'**il est incurvé par rotation de ladite section transversale progressivement le long d'au moins une portion du dispositif autour de l'axe transversal (x) du dispositif parallèle à un dit côté rectiligne.

10. Le dispositif de l'une des revendications 1 à 9, **caractérisé en ce qu'**il est incurvé par rotation de ladite section transversale progressivement le long d'au moins une portion du dispositif autour de l'axe transversal (x) du dispositif perpendiculaire à un dit côté rectiligne.

11. Le dispositif de l'une des revendications 1 à 10, **caractérisé par** une couche conductrice (4) recouvrant ladite âme, ladite couche conductrice (4) étant formée d'un métal.

12. Procédé de fabrication d'un dispositif à guide d'ondes selon l'une des revendications 1 à 11, comportant une étape de fabrication additive de ladite âme, **caractérisé en ce que** ladite fabrication additive est obtenue par additions de couches (30) successives parallèles entre elles, lesdites couches étant non parallèles auxdits côtés rectilignes.

13. Procédé selon la revendication 12, lesdites couches (30) étant obliques par rapport auxdits côtés rectilignes.

14. Procédé selon la revendication 13, l'angle ($\alpha$) entre lesdites couches et lesdits côtés rectilignes étant supérieur à 20°, de préférence supérieur à 40°.

**Patentansprüche**

1. Wellenleitervorrichtung (1) zum Führen eines Hochfrequenzsignals bei einer bestimmten Frequenz f, wobei die Vorrichtung (1) umfasst:

einen durch additive Fertigung hergestellten Kern (3), welcher Seitenwände mit Aussen- (8) und Innenflächen (7) umfasst, wobei die Innenflächen (7) einen Wellenleiterkanal (2) begrenzen,
wobei ein Querschnitt des Kanals (2) zwei geradlinige Seiten aufweist, welche durch zwei Halbabschnitte miteinander verbunden sind, wobei mindestens einer der zwei Halbabschnitte abgerundet oder aus mindestens zwei Geradenabschnitten gebildet ist,
**dadurch gekennzeichnet, dass**
der besagte Querschnitt eine maximale Länge (a) und eine maximale Breite (b) aufweist, wobei das Verhältnis zwischen der maximalen Länge (a) / der maximalen Breite (b) zwischen 2,05 und 3,5, vorzugsweise zwischen 2,05 und 2,4 liegt.

2. Vorrichtung gemäss Anspruch 1, worin der mindestens eine der zwei Halbabschnitte abgerundet ist, wobei beide Halbabschnitte abgerundet sind.

3. Vorrichtung gemäss Anspruch 2, wobei die besagten abgerundeten Halbabschnitte Halbkreise bilden.

4. Vorrichtung gemäss einem der Ansprüche 1 bis 3, wobei die Innenseite des Kanals (2) mit mindestens einer Rille (20) versehen ist.

5. Vorrichtung gemäss einem der Ansprüche 1 bis 4, wobei die Innenseite des Kanals (2) mit zwei Rillen (20) an den besagten langen geradlinigen Seiten versehen ist, wobei die zwei Rillen einander gegenüberliegen.

6. Vorrichtung gemäss einem der Ansprüche 1 bis 5, **dadurch gekennzeichnet, dass** sie durch progressive Drehung des besagten Querschnitts entlang mindestens eines Abschnitts der Vorrichtung verdreht ist.

7. Vorrichtung gemäss Anspruch 6, **dadurch gekennzeichnet, dass** sie durch progressive Drehung des besagten Querschnitts um die Längsachse (z) der Vorrichtung verdreht ist.

8. Vorrichtung gemäss einem der Ansprüche 5 bis 7, **dadurch gekennzeichnet, dass** sie durch progressive Drehung des besagten Querschnitts gleichzeitig um die Längsachse (z) und um mindestens eine weitere Achse (x, y) der Vorrichtung verdreht ist.

9. Vorrichtung gemäss einem der Ansprüche 1 bis 8, **dadurch gekennzeichnet, dass** sie durch progressive Drehung des besagten Querschnitts entlang mindestens eines Abschnitts der Vorrichtung um

die Querachse (x) der Vorrichtung, welche parallel zu einer der besagten geradlinigen Seiten verläuft, gebogen ist.

**10.** Vorrichtung gemäss einem der Ansprüche 1 bis 9, **dadurch gekennzeichnet, dass** sie durch progressive Drehung des besagten Querschnitts entlang mindestens eines Abschnitts der Vorrichtung um die Querachse (x) der Vorrichtung, welche senkrecht zu einer der besagten geradlinigen Seiten verläuft, gebogen ist.

**11.** Vorrichtung gemäss einem der Ansprüche 1 bis 10, **gekennzeichnet durch** eine Leitschicht (4), welche den besagten Kern bedeckt, wobei die besagte Leitschicht (4) aus einem Metall gebildet ist.

**12.** Verfahren zum Herstellen einer Wellenleitervorrichtung gemäss einem der Ansprüche 1 bis 11, umfassend einen Schritt der additiven Fertigung des besagten Kerns,
**dadurch gekennzeichnet, dass** die besagte additive Fertigung durch Auftragen aufeinanderfolgender, zueinander paralleler Schichten (30) erfolgt, wobei die besagten Schichten nicht parallel zu den besagten geradlinigen Seiten verlaufen.

**13.** Verfahren gemäss Anspruch 12, wobei die besagten Schichten (30) schräg zu den besagten geradlinigen Seiten verlaufen.

**14.** Verfahren gemäss Anspruch 13, wobei der Winkel ($\alpha$) zwischen den besagten Schichten und den besagten geradlinigen Seiten grösser als 20°, vorzugsweise grösser als 40°, ist.


**Claims**

**1.** A waveguide device (1) for guiding a radio frequency signal at a predetermined frequency, f, the device (1) comprising:

a core (3) manufactured by additive manufacturing and comprising side walls with external (8) and internal (7) surfaces, the internal surfaces (7) delimiting a waveguide channel (2),
a cross-section of the channel (2) comprising two straight sides connected to each other by two half-portions, at least one of the two half-portions being rounded or formed by at least two line segments,
**characterised in that** said cross-section has a maximum length (a) and a maximum width (b), the ratio between the maximum length (a) and the maximum width (b) being between 2.05 and 3.5, preferably between 2.05 and 2.4.

**2.** Device according to claim 1, in which at least one of the two half-portions is rounded, wherein both half-portions are rounded.

**3.** Device according to claim 2, wherein said rounded half-portions form semicircles.

**4.** The device according to one of claims 1 to 3, wherein the inner face of the channel (2) is provided with at least one ridge (20).

**5.** The device according to one of claims 1 to 4, wherein the inner face of the channel (2) is provided with two ridges (20) on said long straight sides, the two ridges facing each other.

**6.** The device according to one of claims 1 to 5, **characterised in that** it is twisted by progressive rotation of said cross-section along at least one portion of the device.

**7.** The device of claim 6, **characterised in that** it is twisted by progressive rotation of said cross-section about the longitudinal axis (z) of the device.

**8.** The device of one of claims 5 to 7, **characterised in that** it is twisted by progressive rotation of said cross-section simultaneously about the longitudinal axis (z) and at least one other axis (x, y) of the device.

**9.** The device of one of claims 1 to 8, **characterised in that** it is curved by rotation of said cross-section progressively along at least one portion of the device around the transverse axis (x) of the device parallel to a said straight side.

**10.** The device of one of claims 1 to 9, **characterised in that** it is curved by rotating said cross-section progressively along at least one portion of the device around the transverse axis (x) of the device perpendicular to a said straight side.

**11.** The device of one of claims 1 to 10, **characterised by** a conductive layer (4) covering said core, said conductive layer (4) being formed of a metal.

**12.** Method of manufacturing a waveguide device according to one of claims 1 to 11, comprising a step of additive manufacturing of said core,
**characterised in that** said additive manufacturing is achieved by adding successive layers (30) parallel to each other, said layers being non-parallel to said straight sides.

**13.** Method according to claim 12, said layers (30) being oblique with respect to said straight sides.

**14.** Method according to claim 13, the angle ($\alpha$) between

said layers and said straight sides being greater than 20°, preferably greater than 40°.

Fig.1

Fig. 3

Fig. 2

Fig. 4

Fig. 5

EP 3 953 990 B1

Fig. 7

Fig. 6

Fig. 8

Fig. 9

Fig. 10

Fig. 11

Fig. 12

EP 3 953 990 B1

Fig. 13

Fig. 14

Fig. 16

Fig. 15

Fig. 17

## RÉFÉRENCES CITÉES DANS LA DESCRIPTION

**Documents brevets cités dans la description**

- WO 2017208153 A
- US 2015295297 A1, COOK BENJAMIN S [US]
- WO 2017203568 A1, MITSUBISHI ELECTRIC CORP [JP]